Europäisches Patentamt

European Patent Office

Office européen des brevets

(19)

(11) Publication number: **0 021 477**
**B1**

(12) # EUROPEAN PATENT SPECIFICATION

(45) Date of publication of patent specification: **12.01.83**

(51) Int. Cl.³: **A 01 N 25/08**

(21) Application number: **80200501.7**

(22) Date of filing: **28.05.80**

(54) Pesticidal, toxicant-containing compositions, their preparation and their use.

(30) Priority: **11.06.79 GB 7920180**

(43) Date of publication of application:
**07.01.81 Bulletin 81/1**

(45) Publication of the grant of the patent:
**12.01.83 Bulletin 83/2**

(84) Designated Contracting States:
**BE DE FR GB IT NL**

(56) References cited:
**BE - A - 495 694**
**DE - A - 1 296 457**
**FR - A - 938 406**
**FR - A - 1 311 094**
**GB - A - 903 382**
**US - A - 3 030 266**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Pearman, Nicholas Munro**
**60 Mallings Drive**
**Bearsted Green Maidstone, Kent (GB)**
Inventor: **Hill, Alistair Christie**
**Providence House 241 Borden Lane**
**Sittingbourne, Kent (GB)**
Inventor: **van der Hoeven, Cornelis**
**Carel van Bylandtlaan 30**
**NL-2596 HR The Hague (NL)**

(74) Representative: **Rogers, Roy Charles et al,**
**4 York Road**
**London SE1 7NA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Pesticidal, toxicant-containing compositions, their preparation and their use

The invention relates to pesticidal compositions containing toxicant, which compositions are especially suitable to be applied when a controlled release of the toxicant is required or desirable. The invention also relates to the prepartion of such compositions and to the application thereof as pesticides.

Many biocidally active compounds are far too toxic to be applied as such or even in the form of concentrated solutions thereof. Application in the form of a diluted solution is feasible but since in practice large-scale applications are often envisaged, considerable amounts of solvent are required, which unfavourably affect the economy of the application at issue.

Another difficulty consists in the storage of the toxicants. Due to their volatility properties premature release of the active compounds from their solutions may occur and hence storage has to be effected at very low temperatures, e.g. of −5°C or less.

It has been considered to apply the compounds in the form of dispersions in solid wax, but although in some instances satisfactory results are achieved, drawbacks are the sometimes difficult preparation of these dispersions and the usually insufficient stability thereof, so that soon after preparation, phase separation takes place.

German Auslegeschrift No. 1296457 discloses the production of an aqueous suspension of wax-herbicide compositions by dissolving or dispersing a herbicide in a molten paraffin wax, adding a wax-soluble dispersing agent, and adding the resultant solution to water at a temperature above the melting point of the wax.

US Patent No. 3030266 discloses a concentrate of a fungicide or insecticide in an oily base, which can be admixed with a light mineral oil, suitably in conjunction with aluminium stearate and silica gel as surfactants, to produce a liquid formulation capable of forming a fog of fine droplets upon atomisation.

UK Patent Specification No. 903382 discloses metal-containing fungicides dispersed in a heavy oil containing an emulsifying agent.

It has now been found that compositions with improved stability can be obtained in which toxicants are dispersed in a continuous phase in the form of inclusions of relatively uniform size.

According to the invention a pesticidal composition comprises an oil having dispersed therein a number of inclusions which contain a pesticidal toxicant and a dispersing agent, the average diameter of said inclusions being between $10^{-8}$ and $10^{-5}$ m.

The pesticidal toxicants which may be present in the composition include insecticides, fungicides, herbicides, plant growth regulants and anthelmintics, and in particular those pesticides having a systemic activity. In each instance one or more toxicants having biological activity suitable for the envisaged use are incorporated into the composition.

The compositions according to the invention are in particular of value when the oil is a solid and the toxicant is a systemic pesticide, i.e. when they take the form of controlled release matrices, usually in the form of granules or pellets, which are placed in the soil, in the vicinity of the root system of young plants or germinating plant seeds, where they will release their toxicant(s) at a predictable rate into the soil. If the systemic pesticide is incorporated near the root system of a plant, the toxicant may be absorbed and transported to the stem and leaves of the plant, where by virtue of its presence in the plant sap at active concentrations, it will protect the upper plant from pest attack.

A preferred group of toxicants consists of compounds characterised by a pentavalent phosphorus atom having attached thereto two alkoxy groups, one vinyloxy—or substituted vinyloxy group and a divalent oxygen moiety. Especially preferred examples of this category include the systemic insecticides dimethyl - (1 - methyl - 2 - dimethylcarbamoyl) - vinyl - phosphate (dicrotophos) and dimethyl cis - 1 - methyl - 2 - methyl - carbamoylvinylphosphate (monocrotophos).

Another preferred group of toxicants consists of compounds characterised by the presence of a carbamoyl-alkylthiooxime group in the molecule, a much preferred example being the systemic insecticide 1 - methylthio - N - (N' - methylcarbamoyl)ethane oxime (methomyl).

Yet another preferred group of toxicants consists of compounds characterised by the presence of a 2-chlorovinyldialkylphosphate group in the molecule, for example chlorfenvinphos (Birlane (Trade Mark)) and dichlorvos (Vapona (Trade Mark)).

The continuous phase or oil phase in the compositions according to the invention may be liquid or solid. Preferably a liquid or solid wax is employed. Suitable waxes include natural waxes such as beeswax, plant wax and paraffin wax and synthetic waxes such as hydrogenated oils and hydrocarbons of substantially paraffinic nature. In view of the envisaged controlled-release applications, the compositions preferably comprise a solid paraffin wax as the continuous phase.

It has been found that various categories of dispersing agents are suitable to be used in the preparation of stable, toxicant containing compositions. As a rule liquid emulsions can be formed by mechanical mixing of the constituents of the composition, which emulsions are stable for at least 30 minutes and often for 60 minutes or even more, stable periods of at least 100 minutes being no exception.

According to the invention the compositions are found to be stable when the average diameter of the inclusions dispersed in the emulsions is between $10^{-8}$ and $10^{-5}$ m. Preferably their average diameter is within the range of $2.10^{-8}$ and $5.10^{-7}$ m and in most instances they are relatively uniformly sized.

A preferred preparation method, resulting in the formation of solid compositions having uniformly-sized inclusions with an average size within the range as indicated above, consists in adding under stirring a toxicant to a liquid mixture of an oil and a dispersing agent and, after emulsification, dividing the stirred mixture into discrete drops which are allowed by cooling to solidify in a reception zone. If desired, the dispersion may also be formed by heating all ingredients together till the solids are molten followed by stirring the obtained liquid mixture at elevated temperature. The formed drops may be collected on a cooled surface on which they solidify as hemispherical pellets. Also the stirred mixture may be divided into small droplets by atomisation of the mixture with the aid of a gas-stream, e.g. a stream of air, the droplets thus formed being allowed to solidify before they reach a wall of the reception zone. By sieving, droplets of roughly the same size may be recovered, if desired.

A preferred category of dispersing agents which may advantageously be used for the above-mentioned preparation of the compositions, consists in various, usually highly dispersed types of silica. Thus hydrophilic colloidal silicas have found to be very suitable dispersing agents, in particular fumed silicas such as some commercially available Aerosil (Trade Mark) grades, e.g. Aerosil 200.

Hydrophobic silicas are also suitable dispersing agents. These are surface modified silicas, preferably colloidal, in which hydroxy groups on the surface have been removed or replaced by inert groups, usually alkyl groups. They can easily be obtained by reaction of hydrophilic silicas with organic compounds such as dimethyl dichlorosilane. A very suitable hydrophobic silica is Aerosil R 972.

Another preferred group of dispersing agents consists of products resulting from cation exchange reactions between an organic base and a clay mineral. In these exchange reactions cations from the clay mineral lattice are removed and instead thereof organic cations are introduced. The organic cations are suitably derived from organic nitrogen bases such as quaternary ammonium salts and addition salts of amines. Long chain amines, e.g. amines containing a substantially linear alkyl group of 8 to 18 carbon atoms are generally preferred in this connection. Representative examples include trimethyl octadecenyl ammoniumchloride and dimethyloctadecylammonium-chloride.

A preferred example of a clay mineral is montmorillonite. Recommended dispersing agents of this group are, inter alia, the commercially available Bentone's (Trade Mark), e.g. Bentone 34 and Bentone 38.

Still another category of preferred dispersing agents consists in the group formed by optionally ethoxylated homopolymers of alkylacrylates and copolymers of alkylacrylates and vinyl compounds. Preferred alkylacrylates are those with alkyl groups of 14—24 carbon atoms and in particular alkylacrylates are preferred in which the alkyl group contains from 18 to 20 carbon atoms. Suitable vinyl compounds include vinylaromatic compounds include vinylaromatic compounds and vinyl heteroaromatic compounds, in particular vinylpyridines, e.g. 3-vinylpyridine and 4-vinylpyridine. Recommended dispersing agents falling within this category include various commercially available polymeric compounds indicated as "Shellswims" (Trade Mark) in particular "Shellswim-5" which is a homopolymer of a $C_{18}$—$C_{20}$ alkylacrylate and "Shellswim-11" which is a copolymer of a $C_{18}$—$C_{20}$ alkylacrylate and 4-vinylpyridine. No additional solvent is required, but if desired, these dispersing agents may be used dissolved in a suitable solvent such as toluene or xylene.

A further preferred category of dispersing agents consists of low molecular weight oxidised polyethylene waxes. The molecular weight of these oxidized waxes is at most 5000. It has been observed that these agents often exhibit a favourable effect on the mechanical strength of the composition. A preferred dispersing agent of this category is the commercially available product BASF Wax OA. A further example is the commercial product of Allied Chemical A-C62g.

The compositions according to the invention may be applied in the form of liquid emulsions which are sprayed on a locus to be treated with the toxicant, optionally after dilution with suitable solvents. Preferably they are applied in the solid form, conveniently in the form of pellets or granules. The amount of toxicant in the composition is not critical and may vary within relatively wide ranges, but amounts in the range of 2—45% w preferably in the range of 5—10% w, calculated on the total composition are recommended for most practical purposes. When the toxicant is a pesticide, the invention further includes a method of combating pests at a locus which comprises applying to the locus a composition of the invention.

The amount of dispersing agent to some extent is determined by the category from which it is selected, as well as by the quantity of toxicant to be dispersed in the composition.

In general, amounts in the range of 1—10% w, calculated on the total composition are suitable, amounts in the range of 2—5% w, on the same basis, being preferred.

It has been found that in a number of cases, when applying the compositions according to the invention, still more favourable results are obtained if the compositions in addition comprises one or more additives. Thus additives may be incorporated in the compositions for the purpose of optimising the toxicant release rate or for the purpose of improving the mechanical strength of the composition. As examples of suitable additives for the optimisation of the release rate polyethyleneglycol 6000 and polyvinylbutyral (e.g. the commerically available product Mowital B30T (Trade Mark)) may be mentioned.

Also suitable are block copolymers obtained by addition of ethylene oxide to an ethylene glycol base, followed by addition of propylene oxide.

Many of these block copolymers are commercially available products, indicated as "Pluriols" (Trade Mark) or "Pluronic R" (Trade Mark) grades.

"Pluriol RPE 2540" is a particularly preferred additive.

Additives for improving the mechanical strength may be examplified with copolymers of ethylene and vinylacetate (e.g. the commerically available product Elvax (Trade Mark)) and copolymers of ethylene and ethylacrylate (e.g. the commercially available product Zetafax (Trade Mark)).

The amounts of additive(s) to be incorporated in the compositions may suitably be in the range of 0.5 to 10% w, calculated on the total composition, preferably in the range of 1 to 5% w, on the same basis.

The invention is further illustrated by the following Examples, of which Examples 1 to 9 are in accordance with the invention, Example 10 being included for comparative purposes.

Example 1
(a) Preparation of the composition
A vessel provided with an inlet, a bottom outlet and equipped with a variable speed stirrer, was charged with a paraffin wax (Shell Fully Refined Paraffin (FRP) wax, 145—150°F). The wax was heated until it was molten and a dispersing agent, silica K 320 DS (a commercially available hydrophilic fumed silica) was added. The mixture was kept at 100°C and under stirring Nudrin (Trade Mark) (methomyl) was added. The amounts charged to the vessel were 40 g dispersing agent and 100 g Nudrin, the remainder up to 1 kg being Shell FRP wax. After emulsification the dispersion was gradually discharged from the vessel and with the aid of a perpendicularly blown in stream of hot air was sprayed into a reception or "shot tower" where the droplets solidified to granules which were collected.

(b) Testing of the composition
The release rate of Nudrin into water from granules of the composition prepared as mentioned under (a) was measured by a laboratory immersion test according to the following procedure:

Accurately weighed quantities (100 mg) of the size fracton between 0.71 mm and 1.0 mm diameter were measured into a number of 125 cm³ glass bottles, then 100 g of distilled water was added to each. The bottles were provided with metal screw caps with rubber liners, the screw caps being additionally lined with close-fitting discs of aluminium foil in order to prevent/minimise contact of the liquid with the rubber liner. The bottles were attached to a wheel having a diameter of 90 cm rotatable at $33\frac{1}{3}$ rpm. in a room maintained at a constant temperature of 23°C. Individual bottles were removed from the wheel at 1 hour intervals over a 7 hour test period. The amount of methomyl that had been released into the aqueous phase after each time period was determined by filtration of the entire sample through a small plug of glass wool followed by UV spectrophotometry at 234 mm against methomyl solutions of known concentrations.

From the results it could be deduced that 50% of the methomyl originally contained in the granules was released after 9 hours immersion.

Example 2
(a) According to the method described in Example 1(a), a composition was prepared in which instead of silica 50 g Bentone 34 was used as dispersing agent, the amount of wax being the remainder up to 1 kg total mixture. Bentone 34 is a commercially available gellant (ex Abbey Chemicals Ltd.).

(b) According to the procedure of Example 1(b), 50% of the methomyl was released into water after 230 days.

Example 3
(a) According to the method of Example 1(a) a composition was prepared in which the following ingredients were used:
The toxicant was Bidrin (dicrotophos or dimethyl - (1 - methyl - 2 - dimethylcarbamoyl) - vinylphosphate) which was applied in an amount of 100 g. The dispersing agents were Bentone 34, applied in an amount of 23 g and 100 g of BASF wax OA admixed with 20 g of an additive, Mowital B30T, a commercially available product (ex Hoechst). The remainder up to 1 kg was Shell FRP wax, 145—150°F.

(b) Release rate determination—Bidrin
A 25 g sample of the granules prepared as described in Example 3(a) was classified into size fractions by shaking through a nest of 200 mm sieves for 15 mins, using a Pascall shaker.

Accurately weighed 2 g samples of the fraction between sieves BS 16—BS 22 (0.71—1.00 mm) were weighed into two 125 cm³ glass bottles, 100.0±0.2 g of distilled water was added to each, and the bottles were carefully sealed with foil lined aluminium caps. The bottles were attached to the rotating wheel (90 cm diameter rotating at $33\frac{1}{3}$ rpm) in a room maintained at 23±1°C. The bottles were sampled at intervals, and 100 ul aliquots drawn off and diluted at 10.00 cm³ with acetone in volumetric flasks. The release rate bottles were made up to 100 cm³ with the addition of 100 ul distilled water, and returned to the rotating wheel.

The contents of the volumetric flasks were analysed for Bidrin by direct injection into a Pye 104 GLC fitted with FPD detection in the phosphorus mode, using the following conditions:—

| Column | 1 m × 3 mm i.d. glass |
|---|---|
| Stationary phase | 2% Silar 9 CP on Gas Chrom Q 100—200 mesh |
| Oven temperature | 200°C |
| Flow rates | $N_2$-120 cm³ min⁻¹ $H_2$-300 cm³ min⁻¹ $O_2$-60 cm³ min⁻¹ |
| Retention time | 2.4 mins |

The results showed that 50% of the original Bidrin content of the granules was released in 29 days.

Example 4

(a) similarly as in the previous Examples a composition was prepared comprising the following ingredients:

Bidrin 100 g; dispersing agents (Shellswim 5, commercially available 60 g; and BASF Wax OA 100 g) and Shell FRP wax being the remainder up to a total of 1 kg.

(b) The results of the toxicant release rate test, determined as described in Example 3(b) showed that 50% of the Bidrin was released from the granules into water in 27 days.

Example 5

(a) Similarly as in the previous Examples, a composition was prepared comprising the following ingredients:

Bidrin 86 g; dispersing agent (Bentone 38, a commercially available gellant ex Abbey Chemicals Ltd.) 50 g the remainder up to 1 kg being Shell High Melting Paraffin (HMP) wax, 185—190°F.

(b) The results of the toxicant rate test, determined as described in Example 3(b) showed that 50% of the originally contained Bidrin was released into water in 23 days.

Example 6

(a) Similarly as in the previous Examples a composition was prepared of which the ingredients were:

Nudrin 100 g; dispersing agents (Shellswim 11, commercially available 50 g and BASF wax OA 100 g), remainder up to 1 kg Shell FRP wax 145—150°F.

(b) The results of the toxicant release test, determined as described in Example 1(b), showed that 50% of the originally contained methomyl was released into water in 42 days.

Example 7

0.30 g Pluriol RPE 2540, 1.00 g Wax OA and FRP wax, being the remainder up to a total of 10 g accounting for the amount of toxicant still to be added, were heated together to 103°C until the wax was molten. Bidrin (1.17 g) was subsequently added and dispersed in the mixture by the ministirrer. An excellent translucent dispersion was obtained in which only after 94 minutes the first signs of settlement of liquid were observed, and, after 85 minutes, a slight clearing in the top 5% of the dispersion.

When the composition was converted to granules by the method described in Example 1(a) and examined for toxicant release by the method described in Example 3(b), it was found that 50% of the originally contained Bidrin was released into water in 25 days.

Example 8

1.02 g Nudrin, 0.50 g Pluriol RPE 2540, 1.00 g Wax OA and FRP Wax 145—150°F, being the remainder up to a total of 10 g, were heated together at 103°C till the solids were molten. By stirring with the ministirrer a uniform, slightly milky dispersion was formed. First signs of settlement of free liquid were observed at 42 minutes after cessation of stirring.

When the composition was converted to granules by the method described in Example 1(a), and examined for toxicant release by the method described in Example 1(b), it was found that 50% of the methomyl was released into water in 21 days.

Example 9

1.02 g Nudrin, 1.00 g Wax OA and FRP Wax 145—150°F, being the remainder up to a total of 10 g, were heated together at 100°C until all three ingredients were molten. By stirring with the ministirrer a uniform, milky emulsion was formed which remained completely stable for 120 minutes. Thereafter, slight 'clearing' of the emulsion was evident just under the top surface.

When the composition was converted to granules by the method described in Example 1(a) and examined for toxicant release by the method described in Example 1(b), it was found that 50% of the methomyl was released into water in 145 days.

In each of Examples 1 to 9, the average diameter of the inclusions was in the range $10^{-8}$ to $10^{-5}$ m.

Example 10

(For comparison only)

1.17 g Bidrin and 0.50 g of an additive (Pluriol SC 9361, a commercially available polyol, not according to the invention, ex BASF) were dispersed into molten FRP Wax at 103°C, the amount of Wax being the remainder up to 10 g. When stirring was stopped the formed emulsion was unstable and broke within 20 seconds after cessation of stirring.

## Claims

1. A pesticidal composition comprising an oil having dispersed therein a number of inclusions which contain a pesticidal toxicant and a dispersing agent, the average diameter of said inclusions being between $10^{-8}$ and $10^{-5}$ m.

2. A composition according to Claim 1 further characterised in that the oil is a solid paraffin wax.

3. A composition according to Claim 1 or 2 further characterised in that the toxicant is a systemic insecticide.

4. A composition according to any of Claims 1 to 3 further characterised in that the toxicant is dicrotophos or methomyl.

5. A composition according to any of Claims 1 to 4 further characterised in that the dispersing agent is a silica, a product resulting from cation exchange reactions between an organic base and a clay mineral, a montmorillonite, modified with a dimethyloctadecyl ammonium salt, a homopolymer, of an alkylacrylate or a copolymer of an alkylacrylate with a vinyl compound, or an oxidized polyethylene wax with a molecular weight of at most 5000.

6. A composition according to any of Claims 1 to 5 further characterised in that the amount of toxicant is in the range of 2—45% w, calculated on the total composition.

7. A composition according to any of Claims 1 to 6 further characterised in that the amount of dispersing agent is in the range of 1—10% w, calculated on the total composition.

8. A composition according to any one of Claims 1 to 7 further characterised in that one or more additives for release rate optimisation are incorporated in the composition.

9. A composition according to any one of Claims 1 to 8 further characterised in that one or more additives for improving the mechanical strength of the composition are incorporated in the composition.

10. A composition according to Claim 8 or 9, further characterised in that the amount of additive(s) is in the range of 0.5 to 10% w calculated on the total composition.

11. A method for the preparation of a solid composition as claimed in any one of Claims 1 to 10 characterised in that to a liquid mixture of an oil, a dispersing agent and optionally an additive under stirring a toxicant is added and after emulsification the stirred mixture is divided into discrete drops which are allowed by cooling to solidify in a reception zone.

12. A method according to the Claim 11 further characterised in that the stirred mixture is atomised with the aid of a gas stream the droplets thus formed being allowed to solidify before reaching a wall of the reception zone.

13. A method for combating pests at a locus which comprises applying to the locus a composition as claimed in any of Claims 1 to 10.

## Revendications

1. Une composition pesticide comprenant une huile dans laquelle sont dispersées un certain nombre d'inclusions qui contiennent une substance toxique pesticide et un agent dispersant, le diamètre moyen de ces inclusions étant compris entre $10^{-8}$ et $10^{-5}$ m.

2. Une composition selon la revendication 1, caractérisée en outre en ce que l'huile est une cire de paraffine solide.

3. Une composition selon la revendication 1 ou 2, caractérisée en outre en ce que la substance toxique est un insecticide systémique.

4. Une composition selon l'une quelconque des revendications 1 à 3, caractérisée en outre en ce que la substance toxique est du dicrotophos ou du méthomyl.

5. Une composition selon l'une quelconque des revendications 1 à 4, caractérisée en outre en ce que l'agent dispersant est une silice, un produit résultant de réactions d'échange de cations entre une base organique et un minéral argileux, une montmorillonite modifiée par une sel de diméthyloctadécyl ammonium, un homopolymère d'un alcoylacrylate ou un copolymère d'un alcoylacrylate avec un composé vinylique, ou une cire de polyéthylène oxydée d'un poids moléculaire d'au maximum 5000.

6. Une composition selon l'une quelconque des revendications 1 à 5, caractérisée en outre en ce que la quantité de substance toxique est comprise entre 2 et 45% en poids, en calculant par rapport à la composition totale.

7. Une composition selon l'une quelconque des revendications 1 à 6, caractérisée en outre en ce que la quantité d'agent dispersant est comprise entre 1 et 10% en poids, en calculant par rapport à la composition totale.

8. Une composition selon l'une quelconque des revendications 1 à 7, caractérisée en outre en ce qu'un ou plusieurs additifs pour optimisation de la vitesse de libération sont incorporés dans la composition.

9. Une composition selon l'une quelconque des revendications 1 à 8, caractérisée en outre en ce qu'un ou plusieurs additifs pour améliorer la résistance mécanique de la composition sont incorporés dans la composition.

10. Une composition selon la revendication 8 ou 9, caractérisée en outre en ce que la quantité de l'additif ou des additifs est comprise entre 0,5 et 10% en poids, en calculant par rapport à la composition totale.

11. Une méthode pour la préparation d'une composition solide telle que revendiquée dans l'une quelconque des revendications 1 à 10 caractérisé en qu'à un mélange liquide d'une huile, d'un agent dispersant et éventuellement d'un additif, on ajoute, en agitant, une substance toxique, et après émulsionnement le mélange agité est divisé en gouttes discrètes qu'on laisse se solidifier par refroidissement dans une zone de recueil.

12. Un procédé selon la revendication 11, caractérisé en outre en ce que le mélange agité est atomisé à l'aide d'un courant de gaz et qu'on laisse les gouttelettes ainsi formées se solidifier avant d'atteindre une paroi de la zone de recueil.

13. Une méthode de lutte contre des organismes nuisibles en un lieu qui comprend l'application en ce lieu d'une composiont selon l'une quelconque des revendications 1 à 10.

**Patentansprüche**

1. Pesticides Mittel, umfassend ein Öl, in dem eine Anzahl von Einschlüssen enthalten ist, die einen pesticiden Wirkstoff und ein Dispergiermittel enthalten, wobei der mittlere Durchmesser der Einschlüsse zwischen $10^{-8}$ und $10^{-5}$ m liegt.

2. Mittel nach Anspruch 1, ferner dadurch gekennzeichnet, daß das Öl ein festes Paraffinwachs ist.

3. Mittel nach Anspruch 1 oder 2, ferner dadurch gekennzeichnet, daß der Wirkstoff ein systemisches Insekticid ist.

4. Mittel nach einem der Ansprüche 1 bis 3, ferner dadurch gekennzeichnet, daß der Wirkstoff Dicrotophos oder Methomyl ist.

5. Mittel nach einem der Ansprüche 1 bis 4, ferner dadurch gekennzeichnet, daß das Dispergiermittel eine Kieselsäure, ein durch Kationenaustauschreaktion zwischen einer organischen Base und einem Tonmineral entstandenes Produkt, ein mit einem Dimethyloctadecylammoniumsalz modifizierter Montmorillonit, ein Homopolymer aus einem Alkylacrylat oder ein Copolymer aus einem Alkylacrylat mit einer Vinylverbindung oder ein oxidiertes Polyethylenwachs mit einem Molekulargewicht von höchstens 5 000 ist.

6. Mittel nach einem der Ansprüche 1 bis 5, ferner dadurch gekennzeichnet, daß die Menge an Wirkstoff im Bereich von 2 bis 45 Gew.-%, berechnet auf das gesamte Mittel liegt.

7. Mittel nach einem der Ansprüche 1 bis 6, ferner dadurch gekennzeichnet, daß die Menge an Dispergiermittel im Bereich von 1 bis 10 Gew.-%, berechnet auf das gesamte Mittel liegt.

8. Mittel nach einem der Ansprüche 1 bis 7, ferner dadurch gekennzeichnet, daß ein oder mehrere Zusätze zur Optimierung der Abgabegeschwindigkeit in dem Mittel enthalten sind.

9. Mittel nach einem der Ansprüche 1 bis 8, ferner dadurch gekennzeichnet, daß ein oder mehrere Zusätze zur Verbesserung der mechanischen Festigkeit des Mittels in dem Mittel enthalten sind.

10. Mittel nach Anspruch 9 oder 9, ferner dadurch gekennzeichnet, daß die Menge an Zusatz (Zusätzen) im Bereich von 0,5 bis 10 Gew.-%, berechnet auf das gesamte Mittel liegt.

11. Verfahren zur Herstellung eines festen Mittels nach einem der Ansprüche 1 bis 10, dadurch gekennzeichnet, daß man zu einem flüssigen Gemisch aus einem Öl, einem Dispergiermittel und gegebenenfalls einem Zusatz unter Rühren einen Wirkstoff zusetzt und nach Emulgieren das Gemisch unter Rühren in diskrete Tropfen aufteilt, die man unter Kühlen in einer Aufnahmezone sich verfestigen läßt.

12. Verfahren nach Anspruch 11, ferner dadurch gekennzeichnet, daß man das Gemisch unter Rühren mit Hilfe eines Gasstroms zerstäubt und die so gebildeten Tropfen sich vor dem Erreichen der Wand der Aufnahmezone verfestigen läßt.

13. Verfahren zur Bekämpfung von Schädlingen an einer Stelle, umfassend das Aufbringen eines Mittels nach einem der Ansprüche 1 bis 10 auf die Stelle.